# EUROPÄISCHE PATENTANMELDUNG

(11) **EP 4 470 799 A1**
(43) Veröffentlichungstag der Anmeldung: **04.12.2024**
(21) Anmeldenummer: 24173701.4
(22) Anmeldetag: 02.05.2024
(51) Int. Cl.: B60C 11/11, B60C 11/01, B60C 11/03

(54) **FAHRRADREIFEN**

(30) Priorität: 01.06.2023 DE 102023205135
(71) Anmelder: Continental Reifen Deutschland GmbH, 30175 Hannover (DE)
(72) Erfinder: Sudikatis, Florian, 30175 Hannover (DE); Reuter, Benjamin, 30175 Hannover (DE)
(74) Vertreter: Continental Corporation

(57) **Zusammenfassung**

Fahrradreifen (1) mit einem Laufstreifen (2) mit einer Laufstreifenbasisfläche (2a) und einer Profilierung aus voneinander beabstandeten Stollen, zu welchen Schulterstollen (5) und mittige Stollen (6) gehören, wobei die Schulterstollen (5) eine parallel oder im Wesentlichen parallel zur Laufstreifenbasisfläche (2a) verlaufende Deckfläche (8) aufweisen und zwischen dieser und der Laufstreifenbasisfläche (2a)-von Flanken (9a, 9b₁, 9b₂, 9c) umlaufen sind.

Die Schulterstollen (5) weisen einen in Richtung zur Laufstreifenaußenseite weisenden und von einer oder mehreren insgesamt U-, V- oder trapezförmig verlaufenden Flanke(n) (9c) begrenzten oder mitbegrenzten Stollenbereich (5c) auf, welcher mit zumindest einer von der Flanke (9c) oder von einer der Flanken (9c) ausgehenden Aushöhlung (11) versehen ist.

## Beschreibung

Die Erfindung betrifft einen Fahrradreifen mit einem Laufstreifen mit einer Laufstreifenbasisfläche und einer Profilierung aus voneinander beabstandeten Stollen, zu welchen Schulterstollen und mittige Stollen gehören, wobei die Schulterstollen eine parallel oder im Wesentlichen parallel zur Laufstreifenbasisfläche verlaufende Deckfläche aufweisen und zwischen dieser und der Laufstreifenbasisfläche von Flanken umlaufen sind.

Fahrradreifen die für die Fahrradkategorie GRAVEL oder MTB (Mountainbike) vorgesehen und geeignet sind, weisen üblicherweise ein Stollenprofil auf, sodass diese Fahrradreifen die für den Einsatz auf unterschiedlichen, unbefestigten, matschigen oder rutschigen Untergründen, wie Forstwege oder Waldwege, die benötigten Griffeigenschaften besitzen. Für derartige Fahrradreifen ist eine große Anzahl unterschiedlich gestalteter Stollenprofile bekannt. Einige solcher Stollenprofile weisen Fahrradreifen, die auf der Webseite der Firma Continental abgebildet sind, auf, siehe beispielsweise https://www.continental-reifen.de/b2c/bicycle/search-results.html?searchMode=sbs&pogSegment2MappingDTacs=Gravel (abgerufen am 28.04.2023). Ein Stollenprofil weist etwa auch der in Fig. 1 der DE 29509996 U1 gezeigte Fahrradreifen auf.

Die schulterseitig vorgesehenen Stollen der Laufstreifen solcher Fahrradreifen sind üblicherweise großvolumiger, also mit mehr Gummimaterial, ausgebildet, als die zwischen den Schulterstollen angeordneten mittigen Stollen, da die Schulterstollen beim Fahren im Gelände zu den Seitenwänden abgestützt werden. In den Schulterstollen befindet sich daher auch ein großer Teil des Laufstreifengewichts.

Der Erfindung liegt die Aufgabe zugrunde, dass Gummivolumen und damit das Gewicht von Schulterstollen zu reduzieren, ohne die Steifigkeit, die Griffeigenschaften und die Laufleistung des Fahrradreifens zu beeinflussen bzw. zu beeinträchtigen.

Gelöst wird die gestellte Aufgabe erfindungsgemäß dadurch, dass die Schulterstollen einen in Richtung zur Laufstreifenaußenseite weisenden und von einer oder mehreren insgesamt U-, V- oder trapezförmig verlaufenden Flanke(n) begrenzten oder mitbegrenzten Stollenbereich aufweisen, welcher mit zumindest einer von der Flanke oder von einer der Flanken ausgehenden Aushöhlung versehen ist.

Die an diesen Bereichen der Schulterstollen gemäß der Erfindung ausgebildeten Aushöhlungen beeinflussen nicht die Größe der Kontaktflächen der Stollen zum Untergrund und lassen auch die Längen der Griffkanten unberührt, wobei jedoch das Gewicht der Schulterstollen und damit das Reifengewicht verringert wird. Bei gleich gut bleibenden Griffeigenschaften und gleich guter Laufleistung wird weniger Gummimaterial benötigt, was zusätzlich die Produktionskosten reduziert.

Bei einer bevorzugten Ausführung fallen die U-, V- oder trapezförmig verlaufenden Flanke(n) in Richtung zur Laufstreifenaußenseite schräg ab, insbesondere unter einem Winkel von 5° bis 30° zu einer Senkrechten auf die Laufstreifenbasisfläche. An derart ausgebildeten Flanken lassen sich Aushöhlungen unter Erhalt der abstützenden Wirkung der Schulterstollen besonders gut ausbilden.

Bei einer weiteren vorteilhaften Ausführung sind an den bzw. der insgesamt U-, V- oder trapezförmigen Flanke(n) zumindest zwei, insbesondere drei, jeweils durch einen Steg der Flanke(n) voneinander getrennte Aushöhlungen ausgebildet. Dadurch wird an den Flanken eine den jeweiligen Schulterstollen gut abstützende gitterartige Stollenstruktur gebildet.

Die Aushöhlungen weisen ferner bevorzugt eine maximale Tiefe auf, die vom Niveau ihrer Öffnung an der Flanke in senkrechter Richtung bis zur tiefsten Stelle ermittelt 1,00 mm bis 5,00 mm, insbesondere 2,00 mm bis 4,00 mm, beträgt. Die Tiefe dieser Aushöhlungen wird an die tatsächliche Höhe der Schulterstollen angepasst, wobei in niedrigeren Schulterstollen Aushöhlungen mit geringerer Tiefe und in höheren Schulterstollen Aushöhlungen mit einer größeren Tiefe ausgebildet werden können, ohne Stollen strukturell zu beeinträchtigen.

In diesem Zusammenhang ist es ferner besonders vorteilhaft, wenn die Aushöhlung bzw. die Aushöhlungen im Inneren des Schulterstollens von Flächen begrenzt ist bzw. sind, welche zumindest annähernd den Seitenflächen einer dreiseitigen Pyramide oder eines dreiseitigen Pyramidenstumpfs entsprechen.

Die bereits erwähnte gitterartige Struktur lässt sich in besonders vorteilhafter Weise an insgesamt V-förmig verlaufenden Flanken ausbilden, indem mittig an dem zur Laufstreifenaußenseite weisenden Stollenbereich eine in Draufsicht dreieckähnliche Flanke mit einer Dreieckspitze nahe der Laufstreifenbasisfläche vorgesehen wird, welche mit einer gleichermaßen dreieckähnlich gestalteten Aushöhlung versehen ist, wobei bevorzugt seitlich an die mittige Flanke je eine weitere dreieckähnliche Flanke mit einer Dreieckspitze nahe der Deckfläche anschließt, wobei diese Flanken ebenfalls jeweils mit einer gleichermaßen in Draufsicht dreieckähnlich gestalteten Aushöhlung versehen sind.

Gemäß einer weiteren vorteilhaften Ausgestaltung der Schulterstollen weisen diese jeweils einen laufstreifeninnenseitigen Stollenbereich auf, an welchem eine von einer geraden Kante der Deckfläche ausgehende und in Richtung zur Laufstreifenbasisfläche abfallende Flanke ausgebildet ist, wobei die Kante und diese Flanke relativ zur Umfangsrichtung und in Draufsicht auf den Laufstreifen betrachtet unter einem spitzen Winkel von 5° bis 30°, in Richtung zur Laufstreifenmitte geneigt, verlaufen. Auf diese Weise werden zusätzlich die Griffeigenschaften der Schulterstollen, insbesondere bei Kurvenfahrt auf losen Untergründen, vorteilhaft beeinflusst und verbessert.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 einen Umfangsabschnitt eines Fahrradreifens in Schrägansicht, jedoch ohne die zum Unterbau gehörenden Bauteile,
Fig. 2 eine Seitenansicht des Umfangsabschnittes aus Fig. 1,
Fig. 3 eine vergrößerte Ansicht eines Schulterstollens und
Fig. 4a und Fig. 4b vergrößerte Ansichten eines im Laufstreifen mittig positionierten Stollens.

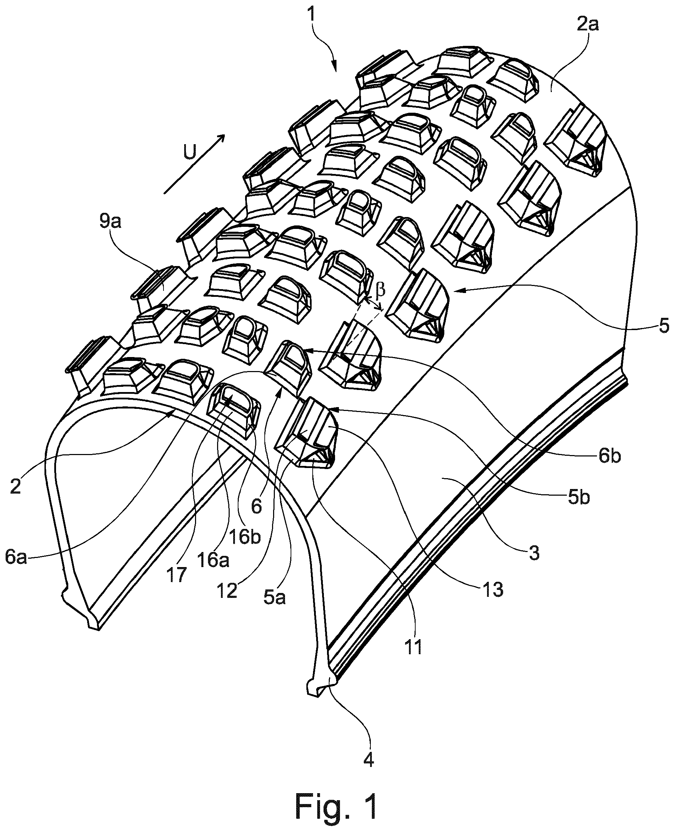

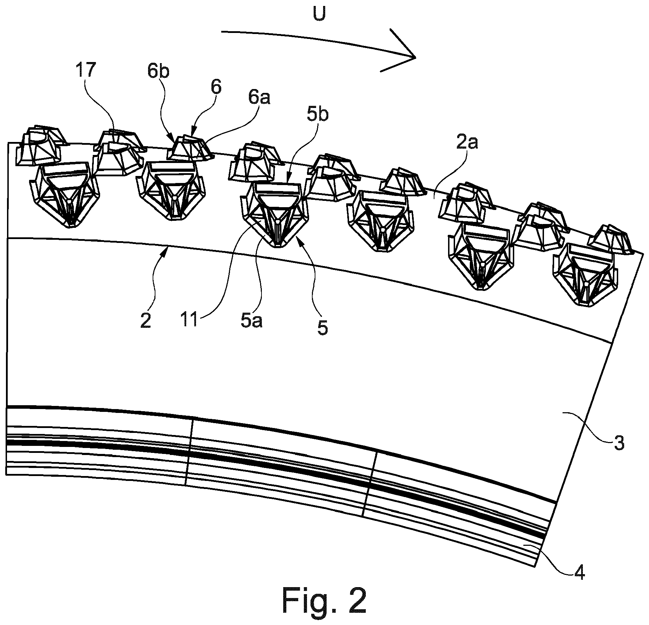

Fig. 1 und Fig. 2 zeigen von einem Fahrradreifen 1 einen profilierten Laufstreifen 2, Seitenwände 3 und Teilbereiche von Wulstbereichen 4. Nicht dargestellt sind beispielsweise die üblicherweise vorgesehene, mit einer Festigkeitsträgerlage versehene Karkasse und Wulstkerne in den Wulstbereichen 4, welche von der Karkasse umschlungen sind.

Der Fahrradreifen 1 ist insbesondere für die Fahrradkategorien GRAVEL und MTB geeignet und vorgesehen und weist daher eine Querschnittsbreite auf, die für Reifen der Fahrradkategorie GRAVEL 35 mm bis 55 mm und für Reifen der Fahrradkategorie MTB 50 mm bis 70 mm beträgt, Die Querschnittsbreite wird als Distanz zwischen den axial äußersten Punkten der Seitenwände 3 des Reifens in axialer Richtung gemessen, bei auf einer Felge montiertem, unter Standardinnendruck befindlichen Reifen gemäß E.T.R.T.O. in der zum Anmeldezeitpunkt dieser Patentanmeldung geltenden Fassung.

Wie insbesondere Fig. 1 zeigt, weist der Laufstreifen 2 des Fahrradreifens 1 ein Stollenprofil mit je einer schulterseitig verlaufenden Reihe aus Schulterstollen 5 und mit mittigen Stollen 6 im Laufstreifenbereich zwischen den Schulterstollen 5 auf. Die Laufstreifenbereiche zwischen den Stollen 5, 6 sind unstrukturiert und bilden eine Laufstreifenbasisfläche 2a. Die Figuren zeigen die Stollen 5, 6 in schematischen Strichdarstellungen mit scharfkantigen Konturen, wobei am vulkanisierten Reifen das Gummimaterial dafür sorgt, dass die Konturen und Übergänge zumeist und üblicherweise kaum merkbar gerundet sind.

Die jeweils eine kleinere Fläche im Laufstreifen 2 einnehmenden und ein kleineres Gummivolumen als die Schulterstollen 5 aufweisenden mittigen Stollen 6 bilden zwischen den Schulterstollen 5 in axialer Richtung orientierte Reihen, die in Umfangsrichtung abwechselnd und aufeinanderfolgend aus vier mittigen Stollen 6, zwei mittigen Stollen 6 und drei mittigen Stollen 6 bestehen, wobei auf eine Reihe aus drei mittigen Stollen 6 wieder eine Reihe aus vier mittigen Stollen 6 folgt. Jeder Stollen 5, 6 weist bevorzugt einen Stollensockel 5a, 6a, welcher an der Laufstreifenbasisfläche 2a eine den jeweiligen Stollen 5, 6 umlaufende niedrige Verbreiterung ist, und einen Stollenkörper 5b, 6b auf.

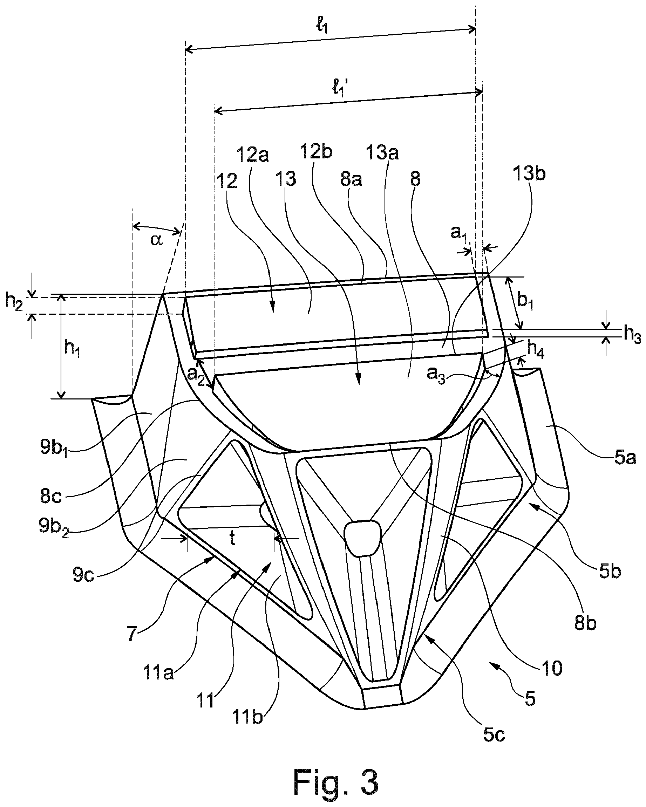

Anhand der Fig. 1 bis Fig. 3, insbesondere der Fig. 3, wird nun die Ausgestaltung eines Schulterstollens 5 näher beschrieben. Der Stollenkörper 5b des Schulterstollens 5 weist parallel zur Laufstreifenbasisfläche 2a eine Basisfläche 7 (Fig. 3) auf, die sich aus einem laufstreifeninnenseitig befindlichen in Umfangsrichtung länglichen rechteckigen oder rechteckähnlich gestalteten Flächenteil mit längeren Seiten und einem an diesen anschließenden laufstreifenaußenseitig befindlichen gleichseitig - dreieckigen oder dreieckähnlichen Flächenteil zusammensetzt. Der Stollenkörper 5b weist ferner eine trapezähnlich (gleichschenkeliges Trapez) gestaltete, parallel zur Basisfläche 7 verlaufende Deckfläche 8 auf, die von zwei parallel zueinander und zu den längeren Seiten des rechteckigen Flächenteils der Basisfläche 7 verlaufenden Stollenkanten, einer längeren Stollenkante 8a und einer kürzeren Stollenkante 8b, und von zwei die Enden der beiden Kanten 8a, 8b verbindenden geringfügig nach außen gebogen oder alternativ nach außen gewinkelt verlaufenden Seitenkanten 8c begrenzt ist. Eine ebene Flanke 9a (Fig. 1) verbindet die laufstreifeninnenseitige längere Stollenkante 8a der Deckfläche 8 mit der außenseitig vorliegenden längeren Seite des rechteckigen Flächenteils der Basisfläche 7. Je zwei Flanken 9b₁ und 9b₂ verbinden die kürzeren Seiten des rechteckigen Flächenteils der Basisfläche 7 mit den nach außen gerundeten oder gewinkelt verlaufenden Seitenkanten 8c der Deckfläche 8. Die Flanken 9a, 9b₁ und 9b₂ sind bevorzugt ebene Flächen, die zur Laufstreifenbasisfläche 2a abfallend zu einer Senkrechten auf die Laufstreifenbasisfläche 2a unter einem Winkel α (Fig. 3) von 5° bis zu 30° verlaufen.

Die Schulterstollen 5 weisen eine gegenüber der Laufstreifenbasisfläche 2a in vertikaler Richtung und bis zur Deckfläche 8 ermittelte Höhe h₁ auf, die in der für solche Laufstreifen üblichen Höhe in der Größenordnung von 2,00 mm bis 11,00 mm beträgt. Das Intervall von 2,00mm bis 11,00 mm, lässt sich nach Reifentypen unterteilen: 2,00mm bis 4,00 für Gravel Reifen mit einer nominalen Querschnittsbreite von 30,00mm bis 45mm, insbesondere 4,00 mm bis 7,00 mm für Gravel, Cross Country und Trail Reifen sowie 7,00mm bis 11,0mm für Enduro und Downhill Reifen wobei 9,00 mm bis 11,00 mm insbesondere eine Anwendung bei speziellen Matschreifen abdeckt. Die Höhe h₁ der Schulterstollen 5 ist bevorzugt konstant, alternativ nimmt die Höhe h₁ der Schulterstollen 5 ausgehend von ihren zur Laufstreifenmitte weisenden Stollenkanten 8a der Deckfläche 8 eine sich in Richtung zu den Stollenkanten 8b leicht verringernde Höhe auf.

Die Schulterstollen 5 sind derart auf der Laufstreifenbasisfläche 2a positioniert, dass sie zur exakten Umfangsrichtung, die in Fig. 1 und Fig. 2 durch einen Pfeil U gekennzeichnet ist, geringfügig schräg gestellt sind, sodass die Stollenkanten 8a, 8b der Deckflächen 8 und die Flanken 9a, in Draufsicht betrachtet, unter einem spitzen Winkel β (Fig. 1) von 5° bis 30°, in Richtung zur Laufstreifenmitte geneigt, verlaufen. Sind, wie beim gezeigten Ausführungsbeispiel an beiden Schultern des Laufstreifens 2 sämtliche Schulterstollen 5 übereinstimmend schräg gestellt so handelt es sich bei dem Laufstreifen 2 um einen laufrichtungsgebundenen Laufstreifen, wobei der Fahrradreifen derart am Rad zu montieren ist, dass bei Vorwärtsfahrt, die durch den Pfeil U angedeutet ist, die Stollenkanten 8a mit ihren weiter laufstreifeninnenseitig befindlichen Enden zuerst in den Untergrund eintreten.

Der Schulterstollen 5 weist infolge des dreieckigen oder dreieckähnlichen Flächenteils der Basisfläche 7 einen der Laufstreifenaußenseite zugewandten Stollenbereich 5c auf, welcher von insbesondere drei und insgesamt V-förmig verlaufenden, dreieckigen bzw. dreieckähnlichen Flanken 9c, im Beispiel einer mittigen Flanke 9c und zwei seitlichen Flanken 9c, begrenzt ist. Beim gezeigten Ausführungsbeispiel ist jede Flanke 9c mit einer Aushöhlung 11 versehen, die jeweils eine Öffnung 11a aufweist, die einen Großteil der Flankenfläche einnimmt, sodass zwischen den Öffnungen 11a der drei Aushöhlungen 11 nur schmale Stege 10 als Teile der Flanken 9c vorhanden sind. Bei der dargestellten Ausführung sind die Öffnungen 11a analog zu den Flanken 9c dreieckig oder dreieckähnlich gestaltet. Die Aushöhlungen 11 sind im Inneren des Stollens 5 von Flächen 11b begrenzt, welche annähernd den Seitenflächen einer dreiseitigen Pyramide oder eines dreiseitigen Pyramidenstumpfs entsprechen. Die mittige Flanke 9c ist derart gestaltet, dass sich die eine ihrer Dreieckspitzen bei der Basisfläche 7 befindet, eine Dreieckseite bei der Deckfläche 8, die seitlichen Flanken 9c weisen jeweils eine Dreieckseite bei der Basisfläche 7 auf und eine Dreieckspitze bei der Deckfläche 8. Die Stege 10 verlaufen unter einem Winkel im Wertebereich des Winkels α zu einer Senkrechten auf die Laufstreifenbasisfläche 2a und in Richtung zur Laufstreifenbasisfläche 2a abfallend.

Die Aushöhlungen 11 weisen eine Tiefe t auf, die vom theoretischen Niveau der Flanken 9c bzw. der "Ebene" der Öffnungen 11a in senkrechter Richtung ausgehend bis zur tiefsten Stelle ermittelt wird, quasi den Höhen der erwähnten dreiseitigen Pyramiden bzw. Pyramidenstümpfe entspricht und die 1,00 mm bis 5,00 mm beträgt. Die Höhe der Pyramidenstümpfe hängt von der Stollenhöhe ab. An Stollen 5 mit einer Höhe h₁ von 2,00 mm und 4,00 mm weisen die Aushöhlungen 11 eine Tiefe t von 1,00 mm bis 2,00 mm, an Stollen 5 mit einer Höhe h₁ von 4,00 mm bis 7,00 mm eine Tiefe t von 2,00 mm bis 4,00 mm, an Stollen 5 mit eine Höhe h₁ von 7,00 mm bis 11,00 mm eine Tiefe t von bis zu 5,00 mm auf.

Die Schulterstollen 5, die üblicherweise das größte Gummivolumen von allen Stollen im Laufstreifen besitzen, sind sie für eine gute Abstützung bei Kurvenfahrt oder entlang von Traversen auf unbefestigtem, unebenem Untergrund besonders wichtig. Durch die Aushöhlungen 11 wird relativ viel Gummimaterial an den der Seitenwand 3 zugewandten Stollenbereichen 5c der Schulterstollen 5 eingespart, ohne dass die Funktion der Schulterstollen 5 strukturell beeinträchtigt wird. Nachdem auch die Kontaktflächen der Schulterstollen 5 zum Untergrund durch diese Ausgestaltung nicht vermindert sind, werden weder die Griffeigenschaften noch die Laufleistung beeinträchtigt.

Bei alternativen Ausführungen ist der Stollenbereich 5c von insgesamt U-förmig oder trapezförmig verlaufenden Flanken begrenzt oder mitbegrenzt und es kann nur eine einzige Aushöhlung vorhanden sein. Möglich sind auch Ausführungen mit zwei oder mehr als drei Aushöhlungen. Die Ausgestaltung der Aushöhlungen kann von der dargestellten und beschriebenen abweichen, beispielsweise können runde Aushöhlungen mit runden Öffnungen vorgesehen sein.

Um bei neuen Fahrradreifen und über eine gewisse Laufleistung die Griffleistung bzw. die Griffeigenschaften der Schulterstollen 5 auf unbefestigtem, unebenem, losem oder schottrigem Untergrund zu verbessern, sind, wie insbesondere Fig. 3 zeigt, auf der Deckfläche 8 der Schulterstollen 5 jeweils zwei keilförmige, in Richtung zu den Stollenkanten 8b, daher in Richtung Seitenwand 3 bzw. Laufstreifenaußenseite, abfallende Erhebungen 12, 13 aus dem Gummimaterial der Schulterstollen 5 ausgebildet. Die Erhebungen 12, 13 sind in Draufsicht langgestreckt ausgebildete, parallel zueinander verlaufende Elemente, die sich auch parallel zu den Stollenkanten 8a, 8b der Deckfläche 8 erstrecken. Die Erhebungen 12, 13 weisen daher jeweils eine abfallende Keilfläche 12a, 13a als Deckfläche und vier (Erhebung 12) sowie drei (Erhebung 13) Seitenflächen auf, die insbesondere senkrecht zur Deckfläche 8 verlaufen. Die Erhebungen 12, 13 sind an der Keilfläche 12a, 13a von parallel zueinander und gerade verlaufenden Längsseiten 12b, 13b begrenzt, die unter dem Winkel β von 5° bis 30° und insbesondere parallel zu den Stollenkanten 8a, 8b verlaufen.

Die nachfolgend angegebenen Dimensionen der Erhebungen 12, 13 variieren innerhalb der jeweiligen Wertebereiche in Abhängigkeit von der Reifendimension und der jeweiligen Stollengröße.

Die Erhebung 12 ist in Draufsicht langgestreckt rechteckig gestaltet und weist auf der Deckfläche 8 zu den Stollenkanten 8a und 8c jeweils einen Abstand a₁ von 0,30 mm bis 1,20 mm, auf. Ihre parallel zu den Stollenkanten 8c ermittelte, konstante Breite b₁ beträgt in der Größenordnung von 2,00 mm bis 7,00 mm. Die keilförmige Erhebung 12 weist bei der Kante 8a ihre größte Höhe h₂ auf, welche 0,50 mm bis 2,50 mm, insbesondere bis 1,50 mm, beträgt, in Folge der Keilform verringert sich ihre Höhe in Richtung zur zweiten keilförmigen Erhebung 13 bis auf eine Höhe hs von 0,20 mm bis 1,50 mm.

Die Erhebung 13 befindet sich in einem insbesondere konstanten Abstand a₂ von 1,50 mm bis 4,00 mm von der Erhebung 12 und weist zwei seitliche Seitenflächen auf, die vorzugsweise der gebogenen Form der Seitenkanten 8c im Wesentlichen folgen. In Draufsicht betrachtet ist die Erhebung 13 bei der gezeigten Ausführung an den Verlauf der Seitenkanten 8c angepasst und verläuft zu diesen unter einem Abstand a₃ von 0,30 bis 1,00 mm. An ihrer breitesten Stelle weist die Erhebung 13 eine Breite im Wertebereich der erwähnten Breite b₁ von 2,00 mm bis 7,00 mm auf. Beide Erhebungen 12, 13 weisen jeweils eine größte Erstreckungslänge I₁, I₁'von 4,00 mm bis 12,00 mm auf, wobei sich bei der gezeigten Ausführung die Erstreckungslängen I₁, I₁' der Erhebungen 12, 13 voneinander unterscheiden.

Die Erhebung 13 weist an ihrer der Erhebung 12 zugewandten Seite eine Höhe h₄ von 0,20 mm bis 1,50 mm, insbesondere bis 0,70 mm, auf, ihre Keilfläche 13a fällt in Richtung zur laufstreifenaußenseitigen Kante 8b der Deckfläche 8 bis auf das Niveau der Deckfläche 8 ab und endet bevorzugt an dieser Kante 8b. Die Erhebungen 12, 13 stellen somit zusätzliche Griffkanten und Griffflächen zur Verfügung.

Bei einer alternativen Ausführung ist auf Schulterstollen 5 nur eine keilförmige und in Richtung zur Laufstreifenaußenseite abfallende Erhebung vorgesehen. Bei einer weiteren alternativen Ausführung sind auf Schulterstollen mehr als zwei, insbesondere drei, in Richtung zur Laufstreifenaußenseite abfallende Erhebungen ausgebildet.

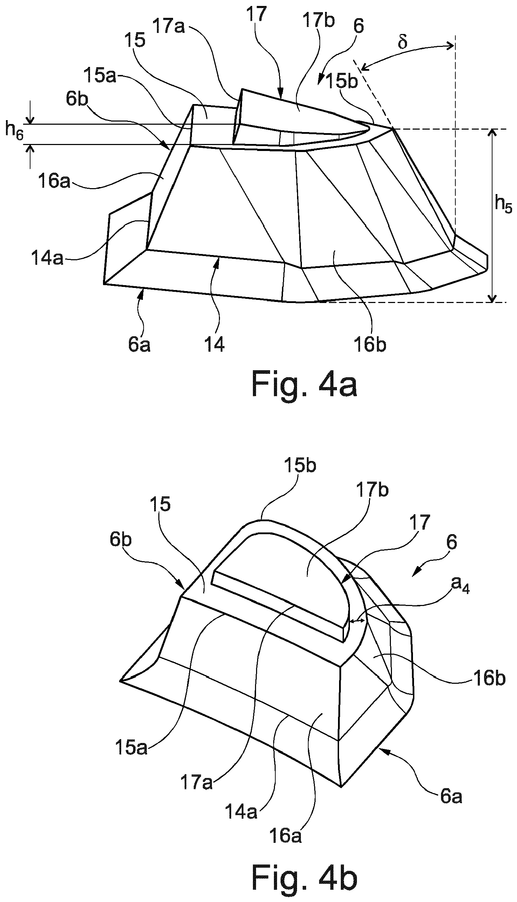

Die Ausgestaltung einer Ausführung eines mittigen Stollens 6 wird anhand der Fig. 1 und der Fig. 4a und 4b näher beschrieben. Dabei variieren die angegebenen Dimensionen innerhalb der jeweiligen Wertebereiche in Abhängigkeit von der Reifendimension und der jeweiligen Stollengröße. Die Stollenkörper 6a der mittigen Stollen 6 weisen jeweils parallel zur Laufstreifenbasisfläche 2a eine Basisfläche 14 und eine parallel zu dieser orientierte Deckfläche 15 auf, wobei die Basisfläche 14 und die Deckfläche 15 parallel zueinander verlaufende gerade Kanten 14a, 15a besitzen, die eine Länge von 4,00 mm bis 9,00 mm aufweisen und in axialer Richtung orientiert sind. Die Basisfläche 14 ist von der erwähnten geraden Kante 14a und weiteren mit dieser Kante 14a ein Polygon mit zumindest vier Ecken bildenden weiteren Kanten umlaufen. Die Deckfläche 15 ist von der Kante 15a und einer die Enden dieser Kante 15a verbindenden insgesamt gerundet bzw. bogenförmig verlaufenden Kante 15b umlaufen. Zwischen der Basisfläche 14 und der Deckfläche 15 verlaufen Flanken 16a, 16b, die relativ zu einer Senkrechten auf die Laufstreifenbasisfläche 2a geneigt sind, insbesondere unter einem spitzen Winkel δ von bis zu 40° und derart, dass sich der Stollenkörper 6b in Richtung zur Deckfläche 15 verjüngt. Es sind mittige Stollen 6 vorhanden, bei welchen die bogenförmig verlaufenden Kanten 15b in Draufsicht bezüglich der Kanten 15a symmetrisch gestaltet sind, oder wie beim mittigen Stollen 6 gemäß Fig. 4a und 4b gezeigt asymmetrisch gerundet verlaufen. Bei einer alternativen Ausführung bildet auch die Deckfläche 15 jeweils ein Polygon mit zumindest vier Ecken.

Die mittigen Stollen 6 weisen eine in senkrechter Richtung zur Laufstreifenbasisfläche 2a ermittelte, insbesondere konstante Höhe h₅ (Fig. 4a) von 2,00 mm bis 8,00 mm, insbesondere von 4,00 mm bis 7,00 mm, auf.

Auf jedem mittigen Stollen 6 ist jeweils eine keilförmig gestaltete, flache Erhebung 17 mit einer Keilfläche 17b als Deckfläche ausgebildet, wie im Folgenden anhand der Fig. 4a und 4b näher erläutert wird. Die in Draufsicht bevorzugt eine der äußeren Kontur der Deckfläche 15 angepasste Gestalt aufweisende Erhebung 17 weist senkrecht zur Deckfläche 15 verlaufende Seitenflächen und am Niveau der Deckfläche 15 zu den Kanten 15a, 15b der Deckfläche 15 einen Abstand a₄ von 0,30 mm bis 1,20 mm auf. Die Keilflächen 17b der Erhebungen 17 fallen bei der bevorzugten Ausführung an sämtlichen mittigen Stollen 6 in die gleiche Umfangsrichtung ab, wobei der Fahrradreifen derart am Fahrrad zu montieren ist, dass die Keilflächen 17b der Erhebungen 17 in Richtung des Abrollens des Fahrradreifens 1 bei Vorwärtsfahrt (Pfeil U in Fig. 1) abfallen. Die Keilflächen 17b der Erhebungen 17 weisen ferner jeweils eine parallel zur Kante 14a verlaufende Kante 17a auf, an welcher die Erhebung 17, senkrecht zur Deckfläche 15 ermittelt, ihre größte Höhe h₆ von 0,50 mm bis 2,50 mm aufweist. Die Keilfläche 17b fällt entweder bis auf das Niveau der Deckfläche 15 ab oder weist gemäß einer alternativen Ausführung an ihrem der Kante 17a abgewandten Ende noch eine gewisse Höhe in der Größenordnung von bis zu 0,20 mm auf.

### Bezugszeichenliste

- 1: Fahrradreifen
- 2: Laufstreifen
- 2a: Laufstreifenbasisfläche
- 3: Seitenwand
- 4: Wulstbereich
- 5: Schulterstollen
- 5a: Stollensockel
- 5b: Stollenkörper
- 5c: Stollenbereich
- 6: mittiger Stollen
- 6a: Stollensockel
- 6b: Stollenkörper
- 7: Basisfläche
- 8: Deckfläche
- 8a, 8b: Stollenkante
- 8c: Seitenkante
- 9a, 9b₁, 9b₂: Flanke
- 9c: Flanke
- 10: Steg
- 11: Aushöhlung
- 11a: Öffnung
- 11b: Fläche
- 12, 13: keilförmige Erhebung
- 12a, 13a: Keilfläche
- 14: Basisfläche
- 14a: Kante
- 15: Deckfläche
- 15a, 15b: Kante
- 16a, 16b: Flanke
- 17: keilförmige Erhebung
- 17a: Kante
- 17b: Keilfläche
- h₁: Höhe des Schulterstollens 5
- h₂, h₃: Höhen der Erhebung 12
- h₄: Höhe der Erhebung 13
- h₅: Höhe der Stollen 6
- h₆: Höhe der Erhebung 17
- t: Tiefe der Aushöhlung 11
- b₁: Breite der Erhebung 12
- a₁, a₂, a₃, a₄: Abstand
- α: Winkel der Flanken 9a, 9b₁, 9b₂, 9c
- β: Winkel der Stollen 5 zur Umfangsrichtung
- β': Winkel der Längskanten der Keilflächen 12b, 13b
- δ: Winkel der Flanken 16a, 16b
- I₁, I₁': Erstreckungslängen der Erhebungen 12, 13
- U: Umfangsrichtung (Abrollrichtung)

## Patentansprüche

1. Fahrradreifen (1) mit einem Laufstreifen (2) mit einer Laufstreifenbasisfläche (2a) und einer Profilierung aus voneinander beabstandeten Stollen, zu welchen Schulterstollen (5) und mittige Stollen (6) gehören, wobei die Schulterstollen (5) eine parallel oder im Wesentlichen parallel zur Laufstreifenbasisfläche (2a) verlaufende Deckfläche (8) aufweisen und zwischen dieser und der Laufstreifenbasisfläche (2a) von Flanken (9a, 9b₁, 9b₂, 9c) umlaufen sind, **dadurch gekennzeichnet,**
**dass** die Schulterstollen (5) einen in Richtung zur Laufstreifenaußenseite weisenden und von einer oder mehreren insgesamt U-, V- oder trapezförmig verlaufenden Flanke(n) (9c) begrenzten oder mitbegrenzten Stollenbereich (5c) aufweisen, welcher mit zumindest einer von der Flanke (9c) oder von einer der Flanken (9c) ausgehenden Aushöhlung (11) versehen ist.

2. Fahrradreifen (1) nach Anspruch 1, **dadurch gekennzeichnet, dass** die U-, V- oder trapezförmig verlaufenden Flanke(n) (9c) in Richtung zur Laufstreifenaußenseite schräg abfallen, insbesondere unter einem Winkel (α) von 5° bis 30° zu einer Senkrechten auf die Laufstreifenbasisfläche (2a).

3. Fahrradreifen (1) nach Anspruch 1 oder 2, **dadurch gekennzeichnet, dass** an den bzw. der insgesamt U-, V- oder trapezförmig verlaufenden Flanke(n) (9c) zumindest zwei, insbesondere drei, jeweils durch einen Steg (10) der Flanke(n) (9c) voneinander getrennte Aushöhlungen (11) ausgebildet sind.

4. Fahrradreifen (1) nach einem der Ansprüche 1 bis 3, **dadurch gekennzeichnet, dass** die Aushöhlung(en) (11) eine maximale Tiefe (t) aufweist bzw. aufweisen, die vom Niveau ihrer Öffnung (11a) an der Flanke (9c) in senkrechter Richtung bis zur tiefsten Stelle ermittelt, 1,00 mm bis 5,00 mm, insbesondere 2,00 mm bis 4,00 mm, beträgt.

5. Fahrradreifen (1) nach einem der Ansprüche 1 bis 4, **dadurch gekennzeichnet, dass** die Öffnung (11a) von zumindest einer Aushöhlung (11) dreieckähnlich mit Seitenlängen von 2,00 mm bis 10,00 mm gestaltet ist.

6. Fahrradreifen (1) nach einem der Ansprüche 1 bis 5, **dadurch gekennzeichnet, dass** die Aushöhlung (11) im Inneren des Schulterstollens (5) von Flächen (11b) begrenzt ist, welche zumindest annähernd den Seitenflächen einer dreiseitigen Pyramide oder eines dreiseitigen Pyramidenstumpfs entsprechen.

7. Fahrradreifen (1) nach einem der Ansprüche 1 bis 6, **dadurch gekennzeichnet, dass** bei insgesamt V-förmig verlaufenden Flanken (9c) mittig an dem zur Laufstreifenaußenseite weisenden Stollenbereich (5c) eine in Draufsicht dreieckähnliche Flanke (9c) mit einer Dreieckspitze nahe der Laufstreifenbasisfläche (2a) vorgesehen ist, welche mit einer gleichermaßen dreieckähnlich gestalteten Aushöhlung (11) versehen ist.

8. Fahrradreifen (1) nach Anspruch 7, **dadurch gekennzeichnet, dass** seitlich an die mittige, mit einer dreieckähnlichen Aushöhlung (11) versehenen Flanke (9c) je eine weitere dreieckähnliche Flanke (9c) mit einer Dreieckspitze nahe der Deckfläche (8) anschließt, welche Flanken (9c) jeweils mit einer gleichermaßen dreieckähnlich gestalteten Aushöhlung (11) versehen sind.

9. Fahrradreifen (1) nach einem der Ansprüche 1 bis 8, **dadurch gekennzeichnet, dass** die Schulterstollen (5) einen laufstreifeninnenseitigen Stollenbereich aufweisen, an welchem eine von einer geraden Kante (8a) der Deckfläche (8) ausgehende und in Richtung zur Laufstreifenbasisfläche (2a) abfallenden Flanke (9a) ausgebildet ist, wobei die Kante (8a) und diese Flanke (9a) relativ zur Umfangsrichtung (U) und in Draufsicht betrachtet, unter einem spitzen Winkel (β) von 5° bis 30°, in Richtung zur Laufstreifenmitte geneigt, verlaufen.
